# EUROPEAN PATENT SPECIFICATION

(11) **EP 4 018 103 B1**
(45) Date of publication and mention of the grant of the patent: **28.02.2024**
(21) Application number: 20772367.7
(22) Date of filing: 20.08.2020
(51) Int. Cl.: F16B 37/08, H02G 3/00, F16B 9/00, F16B 39/02

(54) **SUPPORT STRUCTURE**
STÜTZSTRUKTUR
STRUCTURE DE SUPPORT

(30) Priority: 20.08.2019 GB 201911901
(43) Date of publication of application: 29.06.2022
(73) Proprietor: BLITZ SYSTEMS PTY LTD, Cardiff NSW 2285 (AU)
(72) Inventor: MILLER, Bruce, Little Bentley CO7 8TA (GB)
(74) Representative: Dummett Copp LLP
(86) International application number: PCT/GB2020/051998
(87) International publication number: WO 2021/032984

(56) References cited:
- WO-A1-2018/100329
- GB-A- 1 388 841
- GB-A- 2 241 984
- JP-A- 2019 027 515
- US-A- 4 884 914
- US-A1- 2008 277 536

## Description

### FIELD OF THE INVENTION

The present invention relates to supports or brackets for attachment to threaded rods. In particular this invention relates to supports and brackets for supporting cable trays and ducts that are attached to threaded rods or studs.

### BACKGROUND TO THE INVENTION

The installation of building services typically includes one or more of air conditioning, heating, ventilation, water services, duct work, electrical installation and data installation. Accordingly, the installation of building services may utilise cable tray systems for supporting and containing electrical and data cables and duct supports or suspension rings for supporting ventilation duct work, such as spiral duct. The installation of building services may utilise channel and threaded rod or stud to create a system that supports mechanical pipework clamps, electrical cable tray, cable basket and ventilation ductwork.

Generally some of the building services will be located near a ceiling or roof structure of the building. Accordingly, installation of some of the services and the required supports will be at height.

In conventional channel and threaded rod or stud support systems it is often necessary to install trapeze supports or trapeze hangers to support cable trays and the like. The trapeze supports may, for example, support perforated cable trays, cable basket trays made from wire mesh, and mechanical pipework clamps.

The trapeze hangers conventionally comprise a pair of threaded rods or lengths of stud that are suspended from and extend vertically downward from a ceiling joist or other structure. A hanger or beam is then connected between the threaded rods such that the hanger extends substantially horizontally. The hanger may be formed from a suitable length of channel. A cable tray, cable basket or mechanical pipework clamp may then be supported on and attached to the hanger between the threaded rods.

Traditionally, assembly of a trapeze hanger involves, after securing the threaded rods, screwing a first nut onto the end of each of the threaded rods and setting each of the first nuts at the desired location along the rod. Inserting each of the rods through an aperture in the hanger and moving the hanger along the rods into contact with the set first nuts. Screwing a second nut onto each of the threaded rods below the hanger and tightening the second nut so as to clamp the hanger between the pairs of first and second nuts. Optionally a first washer will be located between the first nut and the hanger and a second washer will be located between the hanger and the second nut.

It will, therefore, be appreciated that the installation of trapeze hangers is both time consuming and fiddly work, with each of the nuts having to be positioned by hand, and often while working at height. Furthermore, each of the nuts and hangers must be installed from the end of the rods, which can be of a significant length. This is particularly the case when a multiple level installation is used. In a multiple level installation, two hangers will be attached to the same pair of threaded rods such that a first hanger is positioned above a second hanger, allowing for two levels of support. It will be appreciated that the first hanger and associated nuts must therefore have to move along a relatively long length of rod to then leave room for the second hanger to be installed below it.

Ventilation ducts and the like are often supported in suspension rings that are secured to threaded rods or studs. The suspension ring includes a threaded aperture that engages with the threads of the rods or stud to secure the suspension ring to the rod. As such it is necessary to rotate the complete suspension ring with respect to the rod to engage the rod in the aperture. The ring must, therefore be attached to the threaded rod before a length of duct is then lifted and secured in place to be supported by the ring. Furthermore, the configuration of the suspension ring is such that the ring is suspended below the end of the threaded rod and, as such, the suspension ring is only engaged with a short length of the threaded rod at the end of the threaded rod. To enable the supported duct to extend in the required direction it may be necessary to rotate the suspension ring with respect to the threaded rod such that the suspension ring is partially disengaged from the rod.

US 4,884,914 describes a support device for supporting a threaded rod in a desired position with respect to the support device. The support device includes a threaded bearing wall arranged to engage with the threaded rod. JP 2019027515 describes an attachment for securing a pipe supporting tool to a hanging bolt. The attachment includes an engagement portion into which the hanging bolt is inserted and a clamping plate that presses the hanging bolt into engagement with the engagement portion. US 2008/277536 describes a clamp including a pair of threaded holes. In use a threaded rod is inserted through the threaded holes and a pressure element in the form of a clip urges the threads of the threaded rod into engagement with the threads of the holes to retain the clamp on the threaded rod. GB 2241984 describes a bracket for attachment to a threaded rod or anchor bolt. The bracket includes first and second holder members, and the second holder member urges the threaded rod towards the first holder member so as to clamp the threaded rod therebetween. The first holder member includes a threaded surface that engages with the threads of the threaded rod and the second holder member includes "stopper claws" that also engage with the threaded rod to secure the bracket to the threaded rod.

It is an object of the present invention to provide an improved support for attachment to threaded rod that overcomes at least one disadvantage of prior art supports whether referred to herein or otherwise.

### SUMMARY OF THE INVENTION

A first aspect of the invention provides a support structure for releasable attachment to an elongate length of threaded rod and a channel member, the support structure comprising:
- a bracket having a support portion for attachment to said channel member and an attachment portion for attachment to said threaded rod, the attachment portion comprising a first aperture and a second aperture, the second aperture being spaced apart from the first aperture, and the first and second apertures being aligned for receiving said threaded rod therethrough;
- at least one detent element configured to engage with threads of said threaded rod to prevent movement of the support structure in a direction parallel to an axis of the threaded rod;
- a pressure element arranged to apply a force to the threaded rod in a direction substantially perpendicular to the axis of the threaded rod; and
- biasing means configured to urge the pressure element towards the threaded rod thereby urging the threaded rod against a periphery of each aperture such that, in use, the at least one detent element engages with a root of the threads of the threaded rod,
characterised in that the support portion comprises a main panel including an array of holes and two side wall panels, each side wall panel extending perpendicularly from an edge of the main panel; and wherein the bracket is formed from a single folded sheet of metallic or polymeric material.

A second aspect of the invention provides a method of releasably attaching a support structure to a threaded rod and a channel member, the method comprising:
- inserting the threaded rod through a pair of spaced apart and aligned apertures in an attachment portion of the support structure;
- urging a pressure element to apply a force to the threaded rod in a direction substantially perpendicular to an axis of the threaded rod to urge the threaded rod against a periphery of each aperture such that at least one detent element of the support structure engages with threads of the threaded rod to prevent movement of the support structure in a direction parallel to the axis of the threaded rod; and
- securing the channel member to a support portion of the support structure, the support portion comprising a main panel including an array of holes and two side wall panels, each side wall panel extending perpendicularly from an edge of the main panel; wherein the support structure comprises a bracket comprising the attachment portion and the support portion and the bracket is formed from a single folded sheet of metallic or polymeric material.

It will be appreciated that the act of urging the threaded rod against a periphery of the or each aperture may involve movement of the threaded rod relative to a part of the support structure, movement of a part of the support structure relative to the threaded rod, or relative movement of both the threaded rod and a part of the support structure. In particular, in some embodiments the threaded rod may be in a fixed position and at least a part of the support structure may move relative to the threaded rod. In other embodiments the support structure may be in a fixed position and at least a part of the threaded rod may move relative to the support structure.

The pressure element may comprise a clamping plate.

In preferred embodiments the support portion comprising means for securing the bracket to an object to be supported. The support portion may include a plurality of holes. In these embodiments the support portion may be secured to an object to be supported by one or more mechanical fasteners extending through one or more of the holes.

The pressure element preferably comprises a pair of engagement tabs, a first one of the engagement tabs extending through the first aperture and a second one of the engagement tabs extending through the second aperture.

Preferably each aperture comprises a first section and a second section, the first section extending from the second section such that edges of the aperture include a shoulder between the first and second sections. The pressure element may be engaged with the second section of each aperture and the threaded rod may be receivable through the first section of each aperture. In these embodiments each detent element is preferably provided by an edge of the first section of each aperture.

Preferably the pressure element is movable between a first position in which the pressure element is in contact with a first edge of the second section of each aperture formed by the shoulder and a second position in which the pressure element is in contact with a second edge of the second section of each aperture.

The biasing means may comprise a spring. Preferably the biasing means urges the pressure element into the first position.

The support structure may further comprise a locking member movable between a first position in which the locking member is not in contact with the pressure element and a second position in which the locking member is in contact with the pressure element. The locking member is preferably configured to apply a force to the pressure element when the locking member is in the second position. The direction of the force applied by the locking member may be the same as the direction of the force applied to the pressure element by the biasing means.

In some embodiments the support structure comprises a first attachment portion including at least one aperture and a first detent element, a second attachment portion including at least one aperture and a second detent element, and a cross member connected to and extending between the first and second attachment portions. The cross member may comprise a perforated channel.

A third aspect of the invention provides a support assembly comprising a support structure according to the first aspect of the invention and a threaded rod extending through each aperture.

In some embodiments the support assembly may comprise a cable tray secured to a support portion of a bracket of the support assembly.

### BRIEF DESCRIPTION OF THE DRAWINGS

The invention will now be further described, by way of example only, with reference to the accompanying drawings, in which:
Figure 1 is a perspective view of a support, according to a first preferred embodiment of the invention, secured to a threaded rod;
Figure 2 is a further perspective view of the support of Figure 1;
Figure 3 is a plan view from below of the support of Figure 1;
Figure 4 is a perspective view of a bracket of the support of Figure 1;
Figure 5 is a further perspective view of the bracket of Figure 4;
Figure 6 is a further perspective view of the bracket of Figure 4;
Figure 7 is a top view of the bracket of Figure 4;
Figure 8 is a side view of the bracket of Figure 4;
Figure 9 is an end view of the bracket of Figure 4;
Figure 10 is a perspective view of a pressure element in the form of a clamping plate forming part of the support of Figure 1;
Figure 11 is a perspective view of a support beam according to the invention comprising two brackets and a connecting channel member;
Figure 12 is a perspective view of a part of a support according to a second preferred embodiment of the present invention;
Figure 13 is a further perspective view of the part of the support of Figure 12;
Figure 14 is a cross-sectional view along the line XIV-XIV of Figure 12;
Figure 15 is a perspective view of a bracket of a support;
Figure 16 is a perspective view of a pressure element in the form of a clamping plate forming part of the support of Figure 15;
Figure 17 shows the support of Figure 15 secured to a threaded rod;
Figure 18 is a plan view from the side of the bracket of Figure 15;
Figure 19 is a cross-sectional view along the line XIX-XIX of Figure 18;
Figure 20 is a cross-sectional view along the line XX-XX of Figure 18;
Figure 21 is a plan view from the side of the pressure element of Figure 16;
Figure 22 is a cross-sectional view along the line XXII-XXII of Figure 21;
Figure 23 is a cross-sectional view along the line XXIII-XXIII of Figure 21;
Figures 24 to 26 show further brackets of supports;
Figure 27 is a perspective view of a duct hanger;
Figure 28 is a further perspective view of the duct hanger of Figure 27;
Figure 29 is a plan view from below of the duct hanger of Figure 27;
Figure 30 is a plan view from a first end of the duct hanger of Figure 27;
Figure 31 is a plan view from a second end of the duct hanger of Figure 27;
Figure 32 is a plan view from a first side of the duct hanger of Figure 27;
Figure 33 is a plan view from a second side of the duct hanger of Figure 27;
Figure 34 is a perspective view of a part of the duct hanger of Figure 27;
Figure 35 is a sectional view along the line XXXV-XXXV of Figure 32; and
Figure 36 is a sectional view along the line XXXVI-XXXVI of Figure 31.

### DESCRIPTION OF THE PREFERRED EMBODIMENTS

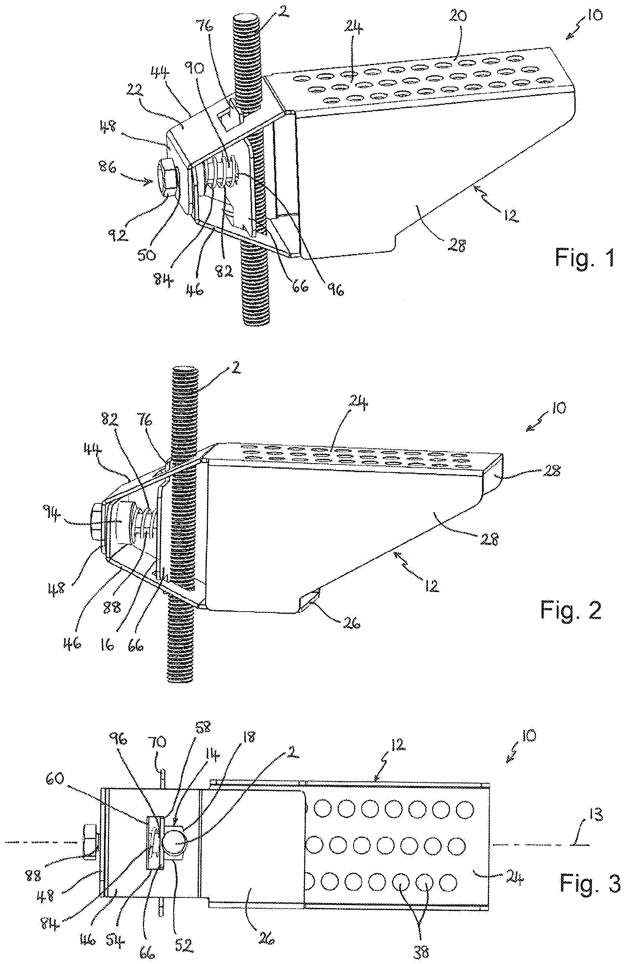

Figures 1 to 3 show a support structure 10 according to a preferred embodiment of the present invention. The support 10 is configured to be releasably attached to an externally threaded rod 2 and to form part of a cable tray system or channel support system.

In the illustrated embodiment the support 10 comprises a bracket 12 having an aperture 14 through which the threaded rod 2 is received. The support 10 further comprises a pressure element 16 that is arranged to apply a force to the threaded rod 2. The force applied to the threaded rod 2 results in the threaded rod 2 being gripped between the pressure element 16 and a part of the bracket 12 and causes the threaded rod 2 to engage with a detent element 18 of the support 10. The engagement of the detent element 18 with the threads of the threaded rod 2 prevents movement of the support 10 with respect to the threaded rod 2 in a direction parallel to an axis of the threaded rod 2. Gripping or clamping of the threaded rod 2 between the pressure element 16 and part of the bracket 12 also restricts or prevents movement of the support 10 with respect to the threaded rod 2 in a direction perpendicular to an axis of the threaded rod 2.

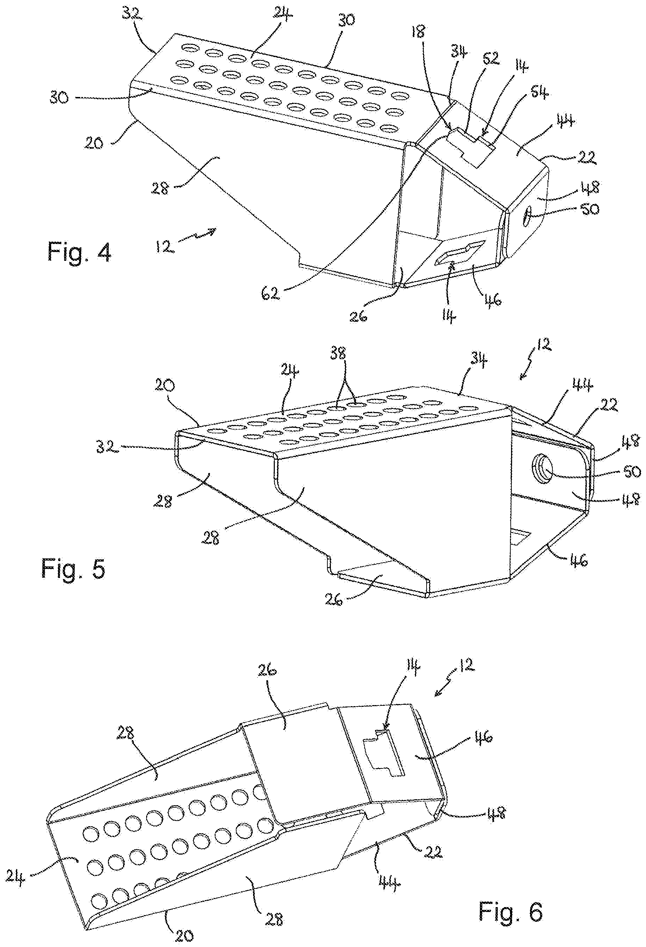

Referring additionally to Figures 4 to 9, the bracket 12 of the support 10 comprises a support portion 20 and an attachment portion 22. In this embodiment the bracket 12 is formed from a single piece of sheet metal which is folded to form the three-dimensional shape of the bracket 12.

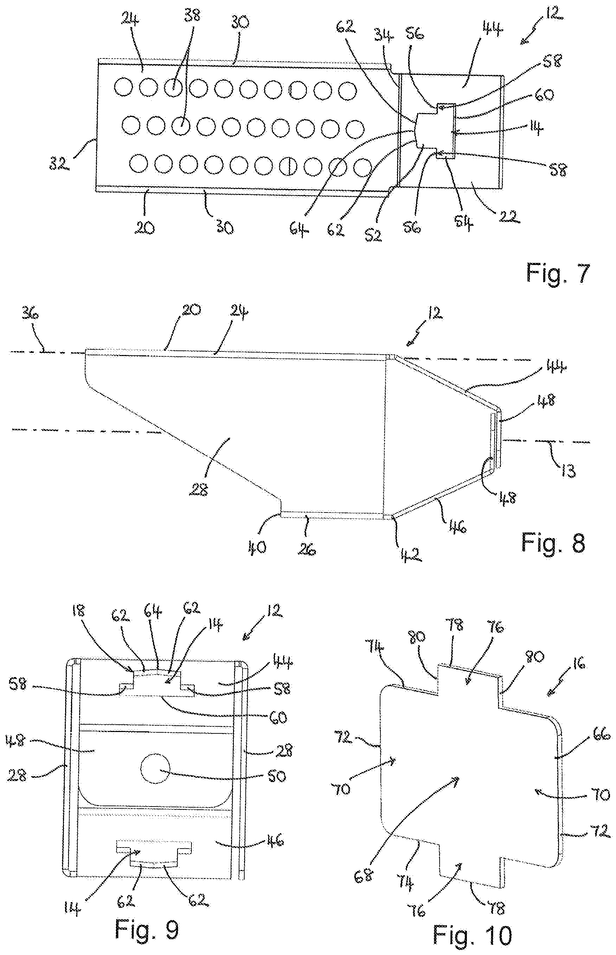

The support portion 20 comprises a substantially rectangular main panel 24, a substantially rectangular secondary panel 26 and two side wall panels 28. The main panel 24 has two opposite and parallel side edges 30, a distal edge 32 and a proximal edge 34. The proximal edge 34 is preferably opposite and parallel to the distal edge 32. An axis 36 of the main panel 24 extends between the proximal and distal edges 34, 32, substantially parallel to the side edges 30. The axis 36 of the main panel 24 defines the direction of and extends parallel to an axis 13 of the bracket 12, as shown in Figure 8. The main panel 24 comprises an array of holes 38.

One of the side wall panels 28 extends from each of the side edges 30 of the main panel 24. The side wall panels 28 extend parallel to each other and substantially perpendicular to the main panel 24. The secondary panel 26 extends from an edge of a first one of the side wall panels 28 in a direction towards a second one of the side wall panels 28. In this embodiment the secondary panel 26 extends towards an edge of the second side wall panel 28 such that the secondary panel 26 is substantially parallel to but spaced from the main panel 24. The main panel 24, side wall panels 28 and secondary panel 26 therefore effectively form part of a box section. It will be appreciated that in some embodiments the secondary panel 26 may be attached or joined to the second side wall panel 28.

In this embodiment a length of the secondary panel 26, between first and second ends 40, 42 and in a direction parallel to the axis 36 of the main panel 24, is less than a length of the main panel 24 between the proximal and distal edges 34, 32. To accommodate this, each of the side wall panels 28 has a substantially trapezoidal (trapezium) or triangular shape.

The attachment portion 22 comprises a first panel or first arm 44 and a second panel or second arm 46. The first arm 44 extends from the proximal edge 34 of the main panel 24. The second arm 46 extends from the second end 42 of the secondary panel 24. The first and second arms 44, 46 extend in converging directions away from the support portion 20 of the bracket 12.

A retaining panel 48 projects from each of the arms 44, 46. Each of the retaining panels 48 comprises a hole 50. In this embodiment each retaining panel 48 projects or extends from an end of one of the arms 44, 46 furthest from the support portion 20 of the bracket 12. The retaining panels 48 extend in opposite directions. In particular, the retaining panel 48 connected to the first arm 44 extends in a direction towards the second arm 46 and the retaining panel 48 connected to the second arm 46 extends in a direction towards the first arm 44. The retaining panels 48 are parallel to each other and are arranged such that at least a part of the retaining panels 48 overlap so that a surface of one retaining panel 48 lies adjacent to or in contact with a surface of the other one of the retaining panels 48, and the holes 50 in the retaining panels 48 are aligned. In other embodiments the bracket 12 may comprise a single retaining panel 48 extending from one of the first and second arms 44, 46.

Each of the first and second arms 44, 46 comprises an aperture 14. In this embodiment, and as shown most clearly in Figures 4 and 7, each aperture 14 is substantially T-shaped and comprises a first section 52 and a second section 54. The first section 52 has a first width in a direction perpendicular to the axis 13 of the bracket 12 and the second section 54 has a second width in a direction perpendicular to the axis 13 of the bracket 12, the second width being greater than the first width. The first section 52 extends centrally from the second section 54 such that edges of the aperture 14 include a pair of shoulders 56 between the first and second sections 52, 54, as shown most clearly in Figure 7. Each of the shoulders 56 provides a first limit edge or surface 58 that extends perpendicular to the axis 13 of the bracket 12. A second limit edge 60 is provided by an edge of the second section 54 furthest from the first section 52.

The apertures 14 are disposed such that the first section 52 is nearer to the support portion 20 of the bracket 12 than the second section 54. An end of the first section 52, furthest from the second section 54, includes a pair of edges 62 arranged in a V-shape, such that an apex 64 of the V-shape is furthest from the second section 54 of the aperture 14. The V-shaped edges 62 form a detent element 18 of the support 10.

The apertures 14 are aligned with each other in a direction substantially perpendicular to the axis 13 of the bracket 12. In particular, the apertures 14 are aligned such that the V-shaped edges 62 of the first section 52 of a first one of the apertures 14 is aligned with the V-shaped edges 62 of the first section 52 of a second one of the apertures 14 in a direction substantially perpendicular to the axis 13 of the bracket 12.

Referring now to Figures 1 to 3 and Figure 10, the support 10 of this embodiment further comprises a pressure element 16 in the form of a clamping plate 66. The clamping plate 66 is generally in the shape of a square cross. The clamping plate 66 comprises a central press section 68, flanked by or disposed between two grip sections 70. A distance between opposite side edges 72 of the grip sections 70 defines a width or first dimension of the clamping plate 66. Each of the grip sections 70 further comprises end edges 74 that define a length dimension of the grip sections 70.

A pair of engagement tabs 76 extend from the press section 68. The engagement tabs 76 extend from the press section 68 in directions substantially perpendicular to the width direction of the clamping plate 66. A distance between opposite end edges 78 of the engagement tabs 76 defines a length or second dimension of the clamping plate 66. A distance between side edges 80 of each of the engagement tabs 76 defines a width of the engagement tabs 76.

Each engagement tab 76 is disposed, with respect to the press section 68, such that the engagement tabs 76 are aligned. Furthermore, the engagement tabs 76, the press section 68 and the grip sections 70 lie in the same plane so that, in this embodiment, the clamping plate 66 is planar.

The clamping plate 66 is engaged with the bracket 12 such that each of the engagement tabs 76 is received in and extends through a respective one of the second sections 54 of the apertures 14. The dimensions of the apertures 14 and the engagement tabs 76 are such that the clamping plate 66 is moveable with respect to the bracket 12 in a direction parallel to the axis 13 of the bracket 12, but movement of the clamping plate 66 in a direction perpendicular to the axis 13 of the bracket 12 is restricted or prevented.

The clamping plate 66 is moveable with respect to the bracket 12 between a first position in which the engagement tabs 76 are in contact with the first limit edges 58 of the apertures 14 and a second position in which the engagement tabs 76 are in contact with the second limit edges 60 of the apertures 14.

The support 10 further comprises biasing means 82 arranged to apply a force to the pressure element 16. The biasing means 82 is configured to urge the pressure element 16 into the first position. In this embodiment the biasing means 82 is in the form of a spring 84 disposed between the clamping plate 66 and one of the retaining panels 48. The spring 84 is arranged to apply a force to the press section 68 of the clamping plate 66. A first end of the spring 84 is preferably attached to the clamping plate 66. The first end of the spring 84 may be welded to the clamping plate 66.

In this embodiment the support 10 further comprises a locking member 86 in the form of a locking bolt 88. The locking bolt 88 includes a shaft 90 and a head 92. The shaft 90 of the locking bolt 88 extends through the aligned holes 50 of the retaining panels 48 in a direction towards the clamping plate 66. A threaded collar or nut 94 is attached to one of the retaining panels 48 so that the threaded nut 94 does not move with respect to the retaining panels 48. In the illustrated embodiment the threaded nut 94 is attached to a surface of the retaining panel 48 such that the threaded nut 94 is disposed between the retaining panels 48 and the support portion 20 of the bracket 12. The locking bolt 88 is engaged with the threaded nut 94 so that the head 92 of the bolt 88 is disposed on an opposite side of the retaining panels 48 to the threaded nut 94.

The locking member 86 is moveable between a first, disengaged position and a second, locked position. In the first position the head 92 of the locking bolt 88 is spaced from the retaining panels 48 and a distal end 96 of the locking bolt 88, furthest from the head 92, is spaced from the clamping plate 66. In the second position the distal end 96 of the locking bolt 88 is in contact with a surface of the clamping plate 66. In this embodiment the locking bolt 88 is moveable between the first position and the second position by rotating the locking bolt 88 with respect to the nut 94. Movement of the locking bolt 88 from the first position to the second position moves the bolt 88 in a direction towards the support portion 20 of the bracket 12. Continued rotation of the locking bolt 88 after the distal end 96 of the bolt 88 is in contact with the clamping plate 66 causes the locking bolt 88 to apply a force to the clamping plate 66 in addition to the force applied by the spring 84. The threaded rod 2 is therefore urged into engagement with the periphery of the apertures 14 and retained in this clamped position by the force applied by the locking bolt 88.

A part of the shaft 90 of the locking bolt 88 preferably extends through a central bore of the spring 84, such that the turns of the spring 84 extend around the shaft 90 of the bolt 88. A second end of the spring 84 may be attached to the threaded nut 94.

The use of the support 10 will now be described with particular reference to Figures 1 to 3.

In an initial configuration, before the support 10 is connected to a threaded rod 2, the locking bolt 88 is in the first position. In particular, the locking bolt 88 is disposed such that there is sufficient distance between the distal end 96 of the bolt 88 that a user may then hold the grip sections 70 of the clamping plate 66 and pull the clamping plate 66 into its second position against the biasing force of the spring 84.

The support 10 may then be slid over the end and along the length of a threaded rod 2 by inserting the threaded rod 2 through the first sections 52 of the apertures 14. With the clamping plate 66 held in its second position the support 10 may be slid freely along the threaded rod 2 with no engagement of the threaded rod 2 with the support 10.

When the support 10 is in the desired or required position on the threaded rod 2, the user releases their hold on the clamping plate 66. The biasing means 82 urges the clamping plate 66 towards or into its first position. The threaded rod 2 is therefore clamped between the clamping plate 66 and a part of the bracket 12. In particular the biasing means 82 and the clamping plate 66 apply a force to the threaded rod 2 such that the detent element 18 is brought into engagement with the threads of the rod 2. In this embodiment each of the V-shaped edges of the first sections 52 of the apertures 14 engages in a respective one of the roots of the thread of the threaded rod 2. The support 10 is therefore unable to move with respect to the rod 2.

To prevent the clamping plate 66 accidently being moved into its second position, thereby releasing the threaded rod 2 from the detent element 18, the locking member 86 is moved into the second position. The extent of movement of the locking member 86 is preferably such that the locking member 86 applies a force to the clamping plate 66 to retain the threaded rod 2 in engagement with the detent element 18 and thereby lock the support 10 in the chosen position on the threaded rod 2.

It will be appreciated that to release and remove the support 10 from the threaded rod 2 the actions described above are performed in reverse.

It is envisaged that the support 10 may form part of a trapeze support or trapeze hanger of a cable tray system. Accordingly, in these systems, each one of a pair of supports 10 will be installed on one of a respective pair of threaded rods 2 suspended from a ceiling or other structure. A cross member or channel member extends between the brackets 12 to span the distance between the pair of supports 10. Preferably a first end of the cross member is secured to the support portion 20 of a first one of the brackets 12 and a second end of the cross member is secured to the support portion 20 of a second one of the brackets 12.

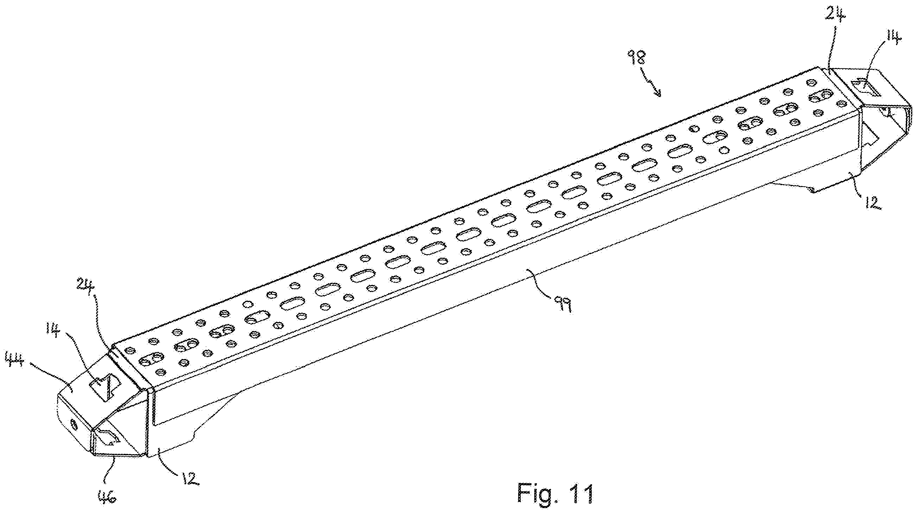

Figure 11 illustrates an embodiment of a support beam 98 comprising a pair of brackets 12 and a channel member or cross member 99 extending between the brackets 12. In this embodiment the cross member 99 is welded at each of its ends to a respective one of the brackets 12. In other embodiments the cross member 99 may be secured or fixed to the brackets 12 by suitable mechanical fasteners. The mechanical fasteners may comprise nuts and bolts for example. The mechanical fasteners may engage with the holes 38 in the main panel 24 of the bracket 12.

The support beam 98 of Figure 11 may be formed by attaching the cross member 99 to the brackets 12 before the resultant, complete trapeze hanger is secured to a pair of suitably spaced threaded rods 2. Alternatively each of the supports 10 may be secured to a threaded rod 2 before the cross member 99 is connected between them, as described above.

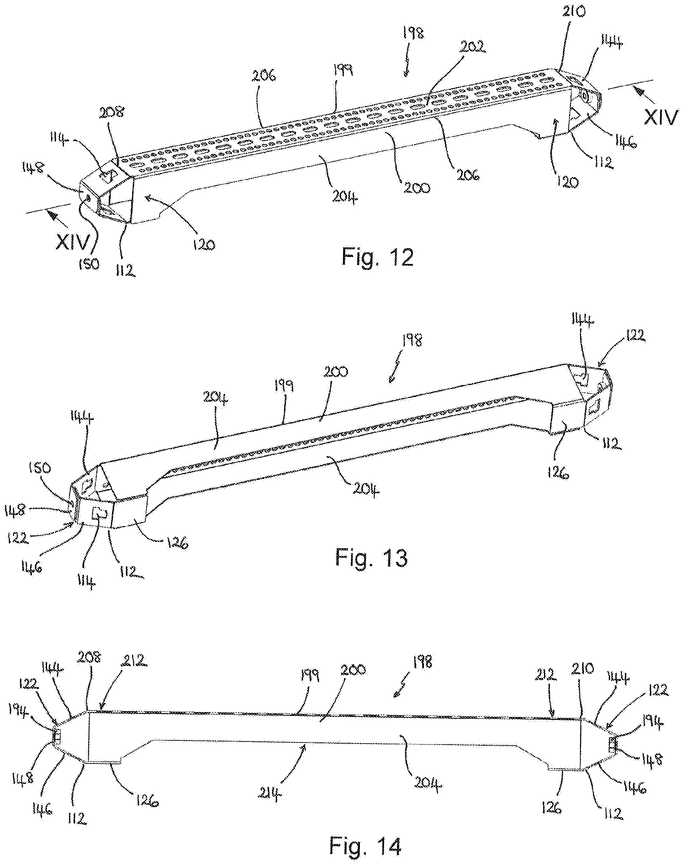

A further embodiment of a support beam 198 of a trapeze hanger according to the present invention is illustrated in Figures 12 to 14. In this embodiment the support portion 120 of each of the brackets 112 is effectively integrally formed with the cross member 199. The support beam 198 of this embodiment is formed from a single sheet of metal that is folded into the required three-dimensional shape.

The support beam 198 comprises an elongate channel section 200 including a main panel 202 and two side walls 204 extending perpendicularly from side edges 206 of the main panel 202. The channel section 200 extends between first and second ends 208, 210. A depth of the side walls 204 in end regions 212 of the channel section 200 at each of the first and second ends 208, 210 is greater than in a central region 214 of the channel section 200. That is, a dimension of the side walls 204 in a direction perpendicular to the main panel 202 is larger in end regions 212 of the channel section 200 than in the central region 214 of the channel section 200.

In each of the end regions 212 a secondary panel 126 extends from an edge of a first one of the side walls 204 in a direction towards a second one of the side walls 204. As such, in the end regions 212, the main panel 202, the side walls 204 and the secondary panels 126 effectively form part of a box section. The end regions 212 of the channel section 200, therefore effectively form support portions 120.

In a similar manner to the first embodiment, an attachment portion 122 extends from each of the first and second ends 208, 210 of the channel section 200. Each attachment portion 122 comprises a first panel or first arm 144 and a second panel or second arm 146. The first arm 144 extends from an edge of the main panel 202 and the second arm 146 extends from an edge of the secondary panel 126. Each of the first and second arms 144, 146 comprises an aperture 114. The apertures 114 are as described above in relation to the first embodiment of the bracket 12 and will not be described in detail here.

A retaining panel 148 including a hole 150 projects from each of the arms 144, 146. The retaining panels 148 are parallel to each other and are arranged such that at least a part of the retaining panels 148 overlap so that a surface of one retaining panel 148 lies adjacent to or in contact with a surface of the other one of the retaining panels 148, and the holes 150 in the retaining panels 148 are aligned. A threaded collar or nut 194 is attached to one of the retaining panels 148 so that the threaded nut 194 does not move with respect to the retaining panels 148. In the illustrated embodiment the threaded nut 194 is attached to a surface of the retaining panel 148 such that the threaded nut 194 is disposed between the retaining panels 148 and the channel section 200.

It will be appreciated that a support for securing to threaded rods 2 may be formed comprising the support beam 198 and suitable pressure elements, biasing means and locking members connected to or engaged with each of the attachment portions 122, as described above in relation to the first embodiment.

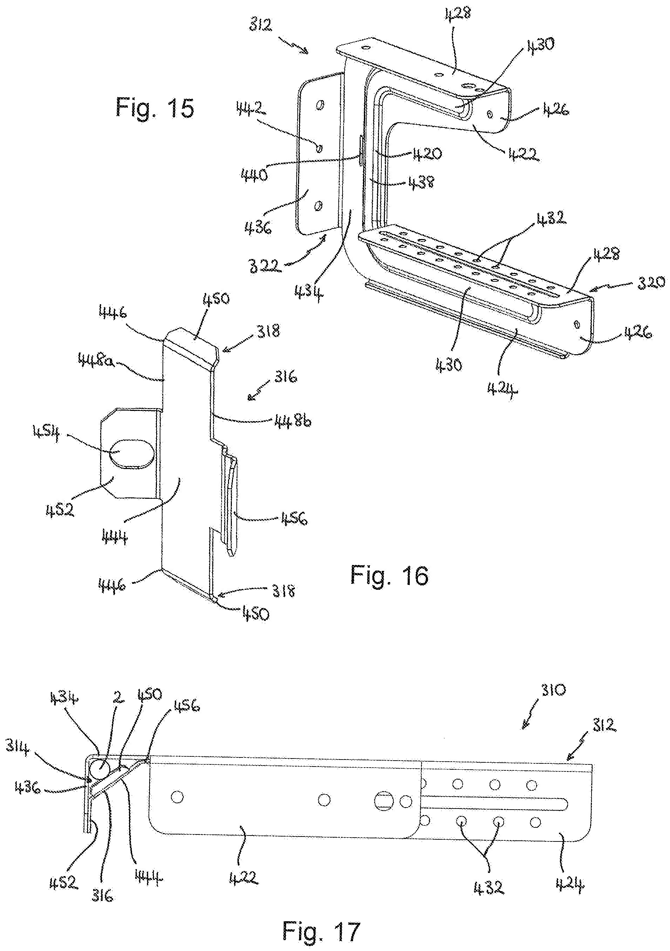

A further example of a support structure 310 not according to the claimed invention is shown in Figures 15 to 23. The support 310 is configured to be secured to a threaded rod 2 and to support a cable tray or similar from only one side of the cable tray.

In this example the support 310 comprises a bracket 312 having an attachment portion in the form of a stem 420, a first arm 422 and a support portion in the form of a second arm 424. The first arm 422 extends from a first end of the stem 420 and the second arm 424 extends from a second end of the stem 420, such that the bracket 312 is substantially U-shaped. In preferred embodiments a length of the first arm 422 is less than a length of the second arm 424.

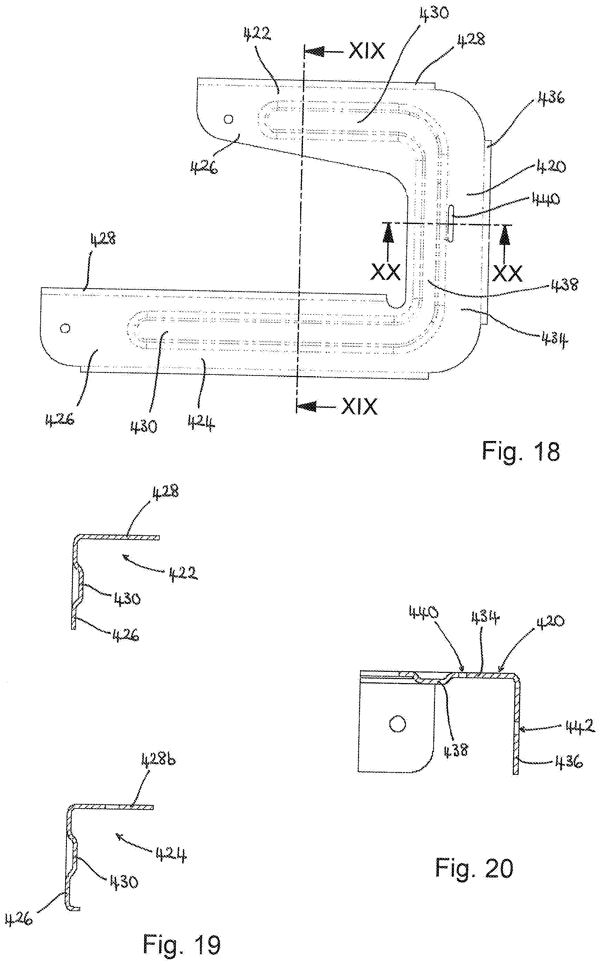

As shown most clearly in Figures 15 and 19, each of the first and second arms 422, 424 comprises a main member 426 and an attachment member 428. In this embodiment the main members 426 are substantially planar elongate panels. The main member panels 426 may comprise stiffening ribs or protrusions 430. The attachment members 428 comprise substantially planar plates or strips. Each attachment plate 428 extends along and from a long edge of the respective main member panel 426. In particular each attachment plate 428 extends substantially perpendicularly from the respective main member panel 426, such that a cross-sectional shape of each of the first and second arms 422, 424 is substantially L-shaped.

In this example the attachment plate 428 of the second arm 424 is elongate and comprises a plurality of holes 432 along its length. The holes 432 may be used to secure a perforated cable tray or similar to the second arm 424 of the bracket 312.

The stem 420 of the bracket 312 comprises a main member 434 and an attachment member 436. In this embodiment the main member 434 is a substantially planar elongate main panel. The main panel 434 may comprise stiffening ribs or protrusions 438. The main panel 434 is continuous with the main member panels 426 of the first and second arms 422, 424. The attachment member 436 comprises an elongate, substantially planar plate. The attachment plate 436 extends along and from a long edge of the main panel 434 in a direction substantially perpendicular to the main panel 434, such that a cross-sectional shape of the stem 420 is substantially L-shaped, as shown most clearly in Figures 15 and 20. Preferably the attachment plate 436 extends from the long edge of the main panel 434 furthest from the first and second arms 422, 424.

The main member 434 of the stem 420 preferably includes a slot 440. In this embodiment the slot 440 is elongate and a length direction of the slot 440 extends parallel to a length direction of the stem 420. The attachment member 436 of the stem 420 preferably includes a hole 442.

The support 310 of this embodiment further comprises a pressure element 316, shown most clearly in Figures 16 and 21 to 23. The pressure element 316 is in the form of a clamping plate 366 comprising a substantially rectangular bridging panel 444 having opposite and parallel first and second edges 446 and opposite and parallel third and fourth edges 448a, 448b. A blade 450 extends along and from each of the first and second edges 446. Each blade 450 extends from the bridging panel 444 in a direction transverse to the plane of the bridging panel 444 and on the same side of the bridging panel 444. Preferably an angle between each of the blades 450 and the bridging panel 444 is between 90° and 170°, and most preferably about 135°. Each of the blades 450 forms a detent element 318 of the support 310.

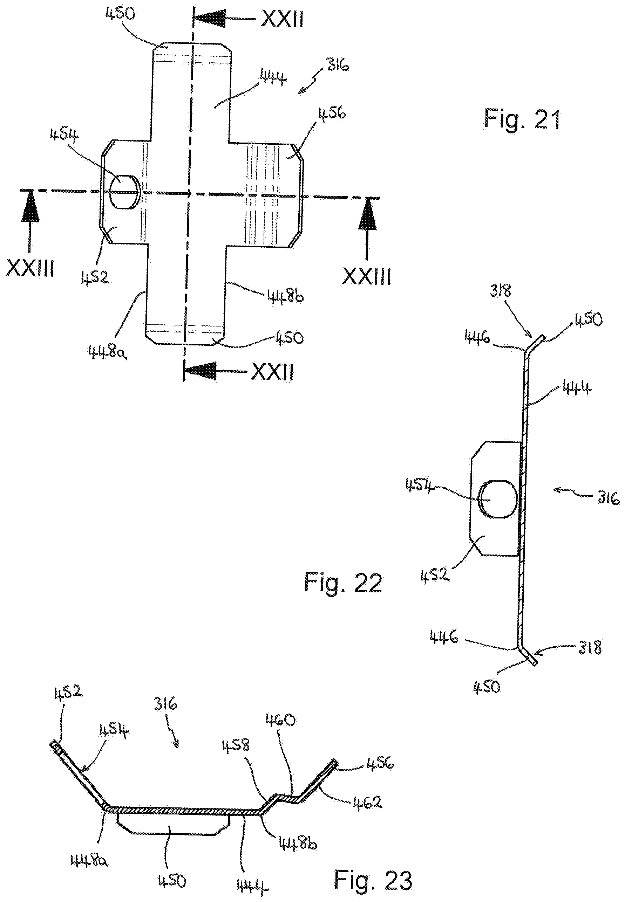

A first attachment arm 452 extends from the third edge 448a of the bridging panel 444. The first attachment arm 452 includes an aperture 454. In preferred embodiments the aperture 454 is elongate in a direction perpendicular to the third edge 448a of the bridging panel 444. The first attachment arm 452 extends from the bridging panel 444 in a direction transverse to the plane of the bridging panel 444. Preferably an angle between the first attachment arm 452 and the bridging panel 444 is between 90° and 170°, and most preferably about 135°. The first attachment arm 452 extends from an opposite side of the bridging panel 444 to the blades 450, as shown most clearly in Figure 23.

A second attachment arm 456 extends from the fourth edge 448b of the bridging panel 444. The second attachment arm 456 preferably has a stepped or corrugated profile, the corrugations extending parallel to the fourth edge 448b of the bridging panel 444, as shown most clearly in Figures 16 and 23. In the illustrated example the second attachment arm 456 includes two bends thereby defining a first portion of the arm 458 adjacent the bridging panel 444, a second portion of the arm 460 between the two bends and a third portion of the arm 462 furthest from the bridging panel 444. The bends are configured such that the first portion 458 and third portion 462 of the arm 456 extend in substantially parallel directions. Preferably an angle between the first portion 458 of the attachment arm 456 and the bridging panel 444 is between 90° and 170°, and most preferably about 135°. Preferably an angle between the third portion 462 of the attachment arm 456 and the bridging panel 444 is between 90° and 170°, and most preferably about 135°.

The pressure element 316 is preferably a unitary element made from relatively thin sheet material, such as sheet metal. As such, there is some flexibility or resilience in the pressure element 316.

To form the support 310 as shown in Figure 17, the pressure element 316 is attached to the stem 420 of the bracket 312. In particular, the pressure element 316 of the present embodiment is secured to the bracket 312 such that the third and fourth edges 448a, 448b of the bridging panel 444 extend substantially parallel to the length direction of the stem 420 and the first and second edges 446 of the bridging panel 444 extend substantially parallel to the plane of the attachment plate 428 of the second arm 424 of the bracket 312.

In preferred examples a fastener (not shown) secures the first attachment arm 452 of the pressure element 316 to the attachment member 436 of the stem 420 of the bracket 312. In particular, the fastener preferably extends through the aperture 454 of the pressure element 316 and the hole 442 in the attachment member 436 of the stem 420. The second attachment arm 456 of the pressure element 316 extends through the slot 440 in the main member 434 of the stem 420.

With the first and second attachment arms 452, 456 of the pressure element 316 attached to or engaged with the bracket 312, the bridging panel 444 bridges or spans a space between the main member 434 and the attachment member 436 of the stem 420 of the bracket 312. The pressure element 316 is arranged such that an angle between the bridging panel 444 and a surface of the main member 434 of the stem 420 and an angle between the bridging panel 444 and a surface of the attachment member 436 of the stem 420 are both about 45°.

An aperture 314 of the support 310 is therefore defined between the bridging panel 444, a part of the main member 434 of the stem 420, and a part of the attachment member 436 of the stem 420.

Furthermore, the pressure element 316 is secured to the bracket 312 such that the blades 450 extend in direction substantially towards the long edge of the main member 434 from which the attachment member 436 extends. In this way the blades 450 extend into the aperture 314 of the support 310.

The use of the support 310 will now be described with particular reference to Figures 15 to 17.

In a preferred example, in an initial configuration, the second attachment arm 456 of the pressure element 316 is engaged in and extends through the slot 440 of the stem 420 of the bracket 312. The first attachment arm 452 is loosely secured to the attachment member 436 of the stem 420 of the bracket 312 by a suitable fastener such that relative movement between the pressure element 316 and the bracket 312 is possible.

In this initial configuration a user may apply a force to the one or both of the pressure element 316 and bracket 312 to maximise the size of the support aperture 314. The support 310 may then be slid over the end and along the length of a threaded rod 2 by inserting the threaded rod 2 through the aperture 314 of the support 310, i.e. inserting the threaded rod 2 through the gap between the bridging panel 444, a part of the main member 434 of the stem 420, and a part of the attachment member 436 of the stem 420, as illustrated in Figure 17.

When the support 310 is at the required position along the threaded rod 2 the bridging panel 444 may be pressed towards the threaded rod 2 such that the blades 450 engage the threads of the rod 2. In particular, each of the blades 450 preferably engages in a respective one of the roots of the thread of the threaded rod 2.

The first attachment arm 452 may then be more firmly secured to the attachment member 436 of the bracket 312 by the fastener such that no movement of the pressure element 316 relative to the bracket 312 is possible. The pressure element 316 therefore retains the threaded rod 2 in engagement with the detent elements 318, thereby locking the support 310 in the chosen position on the threaded rod 2.

In an alternative method of using the support 310, the bracket 312 is held in the required position with respect to the threaded rod 2 before the pressure element 316 is secured to the bracket 312. With the bracket 312 held in position by a user, the second attachment arm 456 of the pressure element 316 is inserted through the slot 440 of the stem 420 of the bracket 312. The first attachment arm 452 is then secured to the attachment member 436 of the bracket 12 by a suitable fastener, such that the blades 450 engage the threads of the rod 2 and no movement of the pressure element 316 relative to the bracket 312 is possible.

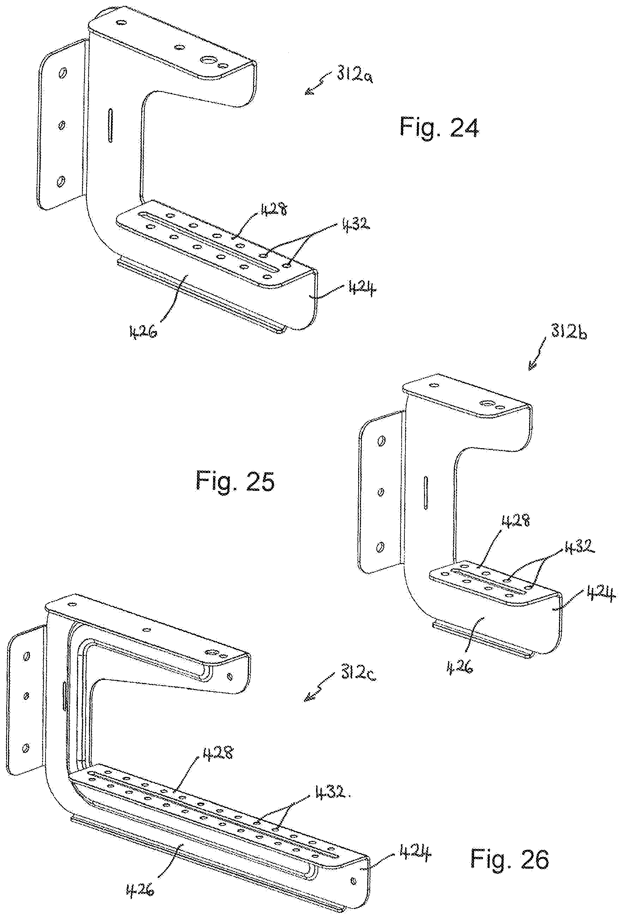

It will be appreciated that the second arm 424 may be of any suitable length to support the required width of cable tray (or similar). As shown in Figures 24 to 26, in other examples of the bracket 312a, 312b, 312c the main member 426 and the attachment member 428 of the second arm 424 are of different lengths. Furthermore, in each example the attachment member 428 of the second arm 424 includes a different number of holes 432 along its length. The holes 432 may be used to secure a perforated cable tray or similar to the second arm 424 of the bracket 312a, 312b, 312c.

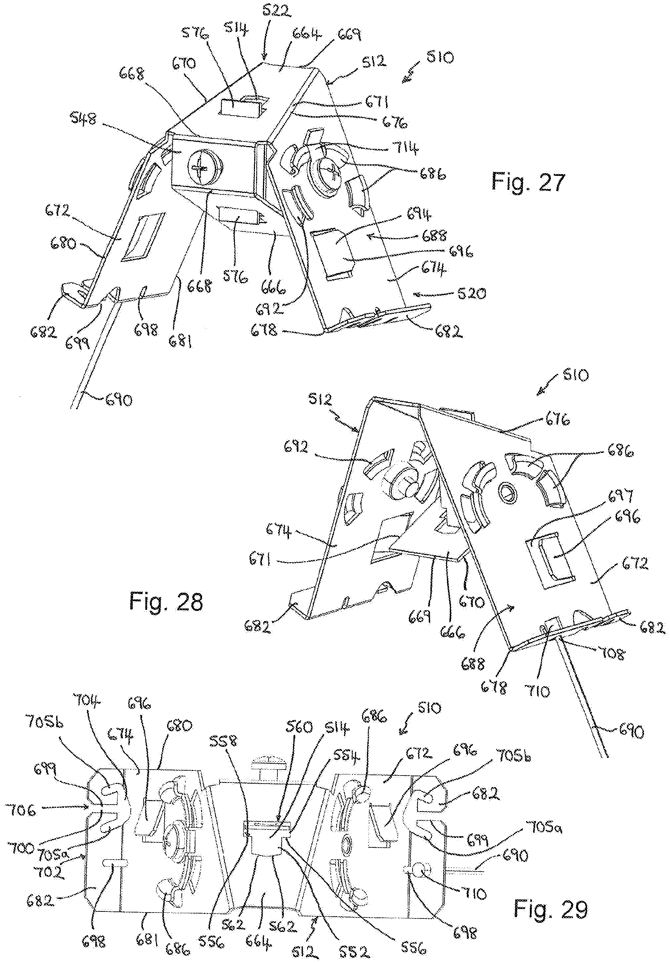

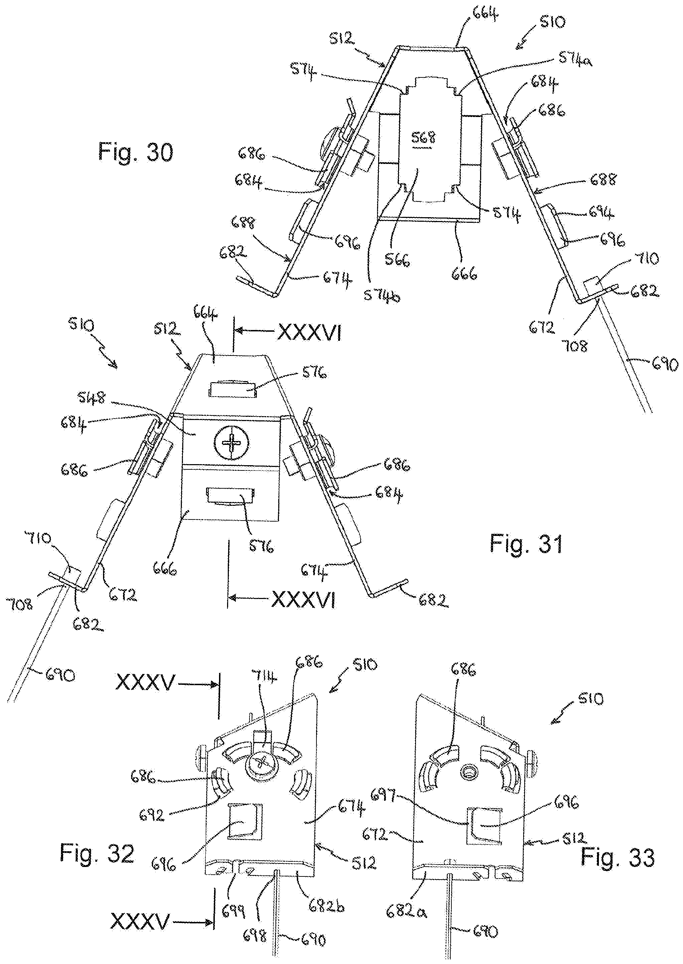

A further example of a support 510 not in accordance with the claimed invention is shown in Figures 27 to 36. The support 510 is configured to be secured to a threaded rod 2 and to support a duct, such as a length of spiral duct.

The support 510, in the form of a duct hanger 510, comprises a bracket 512 having a first panel or top panel 664 including an aperture 514 and a second panel or lower panel 666 including an aperture 514. Each of the top panel 664 and lower panel 666 has opposite first and second end edges 668, 669 and first and second side edges 670, 671. In this example each of the top and lower panels 664, 666 has a substantially trapezoidal (trapezium) shape with the first and second end edges 668, 669 being substantially parallel to each other. A retaining panel 548 extends between the first end edge 668 of the top panel 664 and the first end edge 668 of the lower panel 666. The top panel 664, lower panel 666 and retaining panel 548 form an attachment portion of the bracket 512.

The top panel 664 and lower panel 666 are angled with respect to each other such that a distance between the second end edges 669 of the top and lower panels 664, 666 is greater than a distance between the first end edges 668 of the top and lower panels 664, 666.

Each aperture 514 is substantially T-shaped and comprises a first section 552 and a second section 554. The first section 552 has a first width in a direction parallel to the first edge 668 of the top panel 664 and the second section 554 has a second width in a direction parallel to the first edge 668 of the top panel 664, the second width being greater than the first width. The first section 552 extends centrally from the second section 554 such that edges of the aperture 514 include a pair of shoulders 556 between the first and second sections 552, 554, as shown most clearly in Figure 29. Each of the shoulders 556 provides a first limit edge or surface 558. A second limit edge 560 is provided by an edge of the second section 554 furthest from the first section 552.

The apertures 514 in the top and lower panels 664, 666 are disposed such that the second section 554 is nearer to the retaining panel 548 than the first section 552. An end of the first section 552, furthest from the second section 554, includes a pair of edges 562 arranged in a V-shape, such that an apex 564 of the V-shape is furthest from the second section 554 of the aperture 514. The V-shaped edges 562 form a detent element 518 of the support 510.

Furthermore, the apertures 514 in the top and lower panels 664, 666 are aligned such that a length of threaded rod or stud may be inserted through both of the apertures 514, as described further below.

The bracket 512 further comprises a first leg panel 672 extending from the first side edge 670 of the top panel 664 and a second leg panel 674 extending from the second side edge 671 of the top panel 664. Each leg panel 672, 674 has a proximal edge 676 (coincident with the respective side edge 670, 671 of the top panel 664) and a distal edge 678 furthest from the top panel 664. Each leg panel 672, 674 extends from the top panel 664 at an angle of between about 60° and 70°, and more preferably about 65°. In this way, a distance between the distal edges 678 of the leg panels 672, 674 is greater than a distance between proximal edges 676 of the leg panels 672, 674. Each leg panel 672, 674 also has first and second opposite side edges 680, 681 extending between the proximal and distal edges 676, 678.

A foot panel 682 extends from the distal edge 678 of each of the leg panels 672, 674. Each foot panel 682 extends outwardly and in a direction substantially perpendicular to the respective leg panel 672, 674. The leg panels 672, 674 and foot panels 682 form a support portion 520 of the bracket 512.

Each of the first and second leg panels 672, 674 comprises a securing channel 684, which in this example is defined by a plurality of hook members 686. The hook members 686 are generally disposed in a substantially circular arrangement and extend from a first, outwardly facing surface 688 of the leg panel 672, 674. A distal portion 687 of each of the hook members 686 extends radially outwardly with respect to the substantially circular arrangement of hook members 686. In this embodiment there are four hook members 686 spaced apart and arranged such that the securing channel 684 subtends or extends through an angle of between about 200° and 230°.

In use, and as described further below, a cable 690 is inserted into the securing channel 684. The configuration of the securing channel 684 and in particular the angular extent of the channel 684 means that the direction of the cable 690 is reversed as it extends through the channel 684. In other words the cable 690 is turned or bent through about an angle of at least 180°.

In this example the bracket 512 is formed from a single piece of sheet metal which is folded to form the three-dimensional shape of the bracket 512. Furthermore, each of the hook members 686 is preferably formed by punching and folding a piece of the sheet metal forming the respective leg panel 672, 674. In this way a plurality of holes 692 are formed in the leg panel 672, 674, each hole 692 corresponding to one of the hook members 686.

Each of the first and second leg panels 672, 674 further comprises a keeper 694. The keeper 694 is disposed between the securing channel 684 and the distal edge 678 of the leg panel 672, 674. In this example the keeper 694 is located nearer to the first side edge 680 of the respective leg panel 672, 674 than to the second side edge 681. The keeper 694 comprises a tab 696 that extends from the first surface 688 of the leg panel 672, 674. The tab 696 defines and provides a passage or gap between the tab 696 and the first surface 688 of the leg panel 672, 674 through which a part of the cable 690 may extend.

In a similar manner to the hook members 686, each of the tabs 696 are preferably formed by punching and folding a piece of the sheet metal forming the respective leg panel 672, 674. In this way a hole 697 is formed in each of the leg panels 672, 674, aligned with and corresponding to the tab 696. In this example the tab 696 is planar and a bend is formed at its proximal end so that the tab 696 extends outwardly from and at an angle to the first surface 688 of the leg panel 672, 674.

As shown most clearly in Figure 29, each of the foot panels 682 includes a first aperture 698 and a second aperture 699. In some examples a part of each of the apertures 698, 699 may also extend into the respective leg panel 672, 674.

The second aperture 699 is disposed proximate the first side edge 680 of the leg panel 672, 674. The second aperture 699 includes a first part 700 that extends from an end edge 702 of the foot panel 682 and a second part 704 that extends from the first part 700 at a distance from the end edge 702. The second part 704 of the aperture 699 preferably includes two branches 705a, 705b that each extend from the first part 700 of the aperture 699. Preferably the branches 705 extend from the first part 700 in substantially opposite directions. Furthermore, a section of each of the branches 705 preferably extends in a direction back towards the end edge 702 of the foot panel 682. In use a part of a cable 690 may be located through the second aperture 699 by inserting the cable into the first part 700, via an opening 706 formed in the end edge 702 by the first part 700. The cable may then be moved through the first part 700 and into one of the two branches 705a, 705b of the second part 704 of the aperture 699.

The first aperture 698 is spaced from the end edge 702 of the foot panel 682. The first aperture 698 may be of any suitable shape, and in this example the aperture 698 is elongate and extends between first and second closed ends.

An elongate length of cable 690 is terminated at its first end 708 by a retaining cap 710. The retaining cap 710 has dimensions, in a radial direction, which are larger than the diameter of the cable 690. Furthermore, the radial dimensions of the cap 710 are larger than at least one dimension of the first aperture 698. In this way, and as shown most clearly in Figures 28 and 29, the cable 690 may be engaged with the first aperture 698 such that the retaining cap 710 is disposed on a first side of the foot panel 682, adjacent the leg panel 672, 674, and the rest of the length of cable 690 extends through the aperture 698 and away from the foot panel 682 in a direction opposite to the leg panel 672, 674.

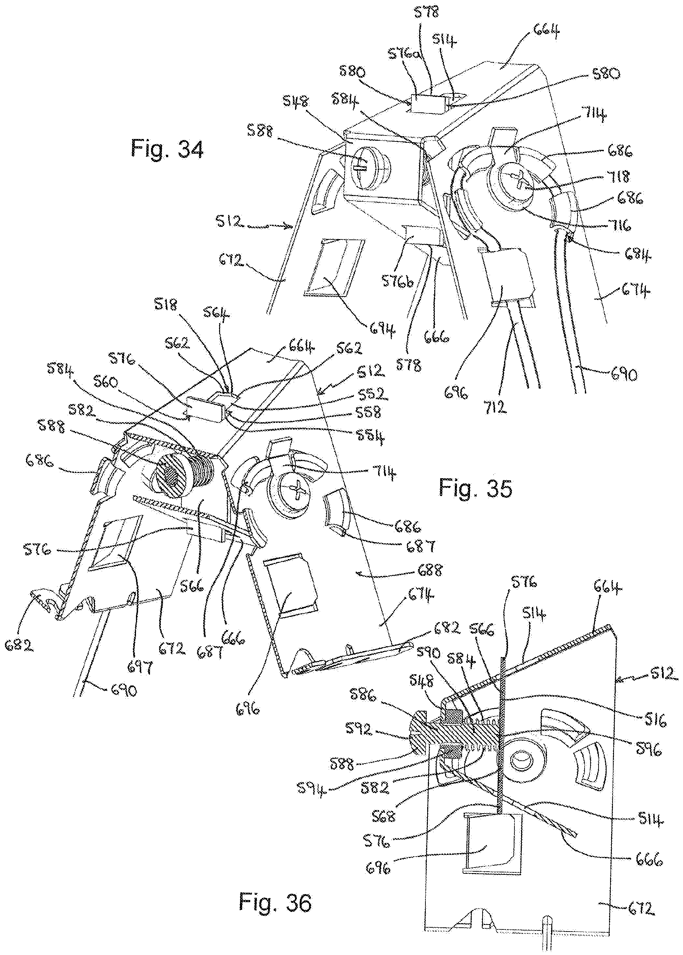

Referring now in particular to Figures 35 and 36, the support 510 of this example further comprises a pressure element 516 in the form of a clamping plate 566. The clamping plate 566 comprises a generally rectangular press section 568 having opposite end edges 574.

A pair of engagement tabs 576 extend from the press section 568. The engagement tabs 576 extend from the end edge 574 of the press section 568. In particular a first engagement tab 576a extends from a first end edge 574a and a second engagement tab 576b extends from a second end edge 574b. A distance between opposite end edges 578 of the engagement tabs 576 defines a length of the clamping plate 566. A distance between side edges 580 of each of the engagement tabs 576 defines a width of the engagement tabs 576.

Each engagement tab 576 is disposed, with respect to the press section 568, such that the engagement tabs 576 are aligned. Furthermore, the engagement tabs 576 and the press section 568 lie in the same plane so that, in this example, the clamping plate 566 is planar.

The clamping plate 566 is engaged with the bracket 512 such that each of the engagement tabs 576 is received in and extends through a respective one of the second sections 554 of the apertures 514. The clamping plate 566 is moveable with respect to the bracket 512 between a first position in which the engagement tabs 576 are in contact with the first limit edges 558 of the apertures 514 and a second position in which the engagement tabs 576 are in contact with the second limit edges 560 of the apertures 514.

The support 510 further comprises biasing means 582 arranged to apply a force to the pressure element 516. The biasing means 582 is configured to urge the pressure element 516 into the first position. In this example the biasing means 582 is in the form of a spring 584 disposed between the clamping plate 566 and the retaining panel 548. The spring 584 is arranged to apply a force to the press section 568 of the clamping plate 566. A first end of the spring 584 is preferably attached to the clamping plate 566. The first end of the spring 584 may be welded to the clamping plate 566.

In this example the support 510 further comprises a locking member 586 in the form of a locking bolt 588. The locking bolt 588 includes a shaft 590 and a head 592. The shaft 590 of the locking bolt 588 extends through the hole 550 of the retaining panel 548 in a direction towards the clamping plate 566. A threaded collar or nut 594 is attached to the retaining panel 548 so that the threaded nut 594 does not move with respect to the retaining panel 548. In the illustrated example the threaded nut 594 is attached to a surface of the retaining panel 548 such that the threaded nut 594 is disposed between the retaining panel 548 and the clamping plate 566. The locking bolt 588 is engaged with the threaded nut 594 so that the head 592 of the bolt 588 is disposed on an opposite side of the retaining panel 548 to the threaded nut 594.

The locking member 586 is moveable between a first, disengaged position and a second, locked position. In the first position the head 592 of the locking bolt 588 is spaced from the retaining panel 548 and a distal end 596 of the locking bolt 588, furthest from the head 592, is spaced from the clamping plate 566. In the second position the distal end 596 of the locking bolt 588 is in contact with a surface of the clamping plate 566. In this example the locking bolt 588 is moveable between the first position and the second position by rotating the locking bolt 588 with respect to the nut 594. Movement of the locking bolt 588 from the first position to the second position moves the bolt 588 in a direction towards the clamping plate 566. Continued rotation of the locking bolt 588 after the distal end 596 of the bolt 588 is in contact with the clamping plate 566 causes the locking bolt 588 to apply a force to the clamping plate 566 in addition to the force applied by the spring 584. The threaded rod 2 is therefore urged into engagement with the peripheries of the apertures 514 and retained in this clamped position by the force applied by the locking bolt 588.

A part of the shaft 590 of the locking bolt 588 preferably extends through a central bore of the spring 584, such that the turns of the spring 584 extend around the shaft 590 of the bolt 588. A second end of the spring 584 may be attached to the threaded nut 594.

The use of the support 510 will now be described with particular reference to Figures 27 and 34.

In an initial configuration, before the support 510 is connected to a threaded rod 2, the locking bolt 588 is in the first position. In particular, the locking bolt 88 is disposed such that there is sufficient distance between the distal end 96 of the bolt 88 that a user may then pull the clamping plate 566 into its second position against the biasing force of the spring 584.

The support 510 may then be slid over the end and along the length of a threaded rod 2 by inserting the threaded rod 2 through the first sections 552 of the apertures 514. With the clamping plate 566 held in its second position the support 510 may be slid freely along the threaded rod 2 with no engagement of the threaded rod 2 with the support 510. It will be appreciated that the support 510 may be positioned on the threaded rod 2 proximate an end of the threaded rod 2 such that only a short length of threaded rod 2 protrudes through the aperture 514 in the lower panel 666 in a direction away from the top panel 664.

When the support 510 is in the desired or required position on the threaded rod 2, the user releases their hold on the clamping plate 566. The biasing means 582 urges the clamping plate 566 towards or into its first position. The threaded rod 2 is therefore clamped between the clamping plate 566 and a part of the bracket 512. In particular the biasing means 582 and the clamping plate 566 apply a force to the threaded rod 2 such that the detent element 518 is brought into engagement with the threads of the rod 2. In this example each of the V-shaped edges 562 of the first sections 552 of the apertures 514 engages in a respective one of the roots of the thread of the threaded rod 2. The support 510 is therefore unable to move with respect to the rod 2.

To prevent the clamping plate 566 accidently being moved into its second position, thereby releasing the threaded rod 2 from the detent element 518, the locking member 586 is moved into the second position. The extent of movement of the locking member 586 is preferably such that the locking member 586 applies a force to the clamping plate 566 to retain the threaded rod 2 in engagement with the detent element 518 and thereby lock the support 510 in the chosen position on the threaded rod 2.

It will be appreciated that to release and remove the support 510 from the threaded rod 2 the actions described above are performed in reverse.

To secure a length of duct to the support 510 the first end 708 of a length of cable 690 is engaged in the first aperture 698 of a first foot panel 682a, as described above, such that the first end 708 is retained by the retaining cap 710. A loop of cable is then formed below the bracket 512 and a second end of the cable 690 is drawn towards a second foot panel 682b and the second leg panel 674. A section of the cable 690 proximate its second end is inserted into the second aperture 699 such that the cable 690 extends through the first branch 705a. A second end region 712 of the cable 690 is then engaged in the securing channel 684 and inserted into the gap between the tab 696 and the first surface 688 of the second leg panel 674. In particular, in this example, the cable 690 is engaged with each of the hook members 686 such that a part of the cable 690 extends around and through the securing channel 684, and a further part of the cable 690 extends under the tab 696. The cable 690 is then inserted into the second aperture 699 such that the cable 690 extends through the second branch 705b. Engagement of the second end region 712 of the cable 690 with the aperture 699, securing channel 684 and tab 696 retains the second end of the cable 690 in a fixed position with respect to the bracket 512.

To ensure that the cable 690 does not become disengaged from the securing channel 684 during use of the support 510, the support 510 preferably comprises a clamping member 714 attached to the leg panel 674. The clamping member 714 is secured to the leg panel 674 at a first end 716 by a suitable fastener 718. The clamping member 714 extends through a gap between two of the hook members 686. The fastener 718 and clamping member 714 are configured such that the clamping member 714 can be moved between a first position and a second position. In the first position there is a gap between the clamping member 714 and the first surface 688 of the leg panel 674 into which the cable 690 can be inserted and through which the cable 690 can extend. In the second position the clamping member 714 is closer to the first surface 688 of the leg panel 674 than in the first position such that the cable 690 may be clamped between the clamping member 714 and the first surface 688 of the leg panel 674.

The bracket 512 and cable 690 therefore form a loop in which a length of duct may be supported. It will be appreciated that the duct may be inserted into the loop of cable 690 after the second end of the cable 690 has been secured to the bracket 512. Alternatively, the cable 690 may be wrapped around a part of the duct before the second end of the cable 690 is secured to the bracket 512.

Although in the above description the first end 708 of the cable 690 was engaged with the first foot panel 682a and the second end region 712 of the cable 690 was engaged with the securing channel 684 and tab 696 of the second leg panel 674 and the second aperture 699 of a second foot panel 682b, it will be appreciated that, alternatively, the first end 708 of the cable 690 may be engaged with the second foot panel 682b and the second end region 712 of the cable 690 may be engaged with the securing channel 684 and tab 696 of the first leg panel 672 and the second aperture 699 of the first foot panel 682a. A clamping member 714 and fastener 718 may therefore additionally or alternatively be secured to the first leg panel 672.

Although in the preceding embodiments the bracket was formed from a sheet of metal folded to form the three-dimensional shape of the bracket, in other embodiments the bracket may be formed by a sheet of polymeric material. In yet further embodiments the bracket may be formed from any suitable material, and by any suitable means of manufacture.

In all of the preceding embodiments the attachment portion of the bracket, together with the aperture(s) and pressure element, provides a support structure that may be quickly, easily and repeatedly attached to and removed from a length of threaded rod or stud. The configuration of the supports is such that a detent element is engageable with the thread of the threaded rod, and in particular with the roots of the thread, to resist movement of the support structure with respect to the rod.

The present invention therefore provides an improved support structure for attachment to a threaded rod which is quicker and easier to attach than prior art supports.

## Claims

1. A support structure (10) for releasable attachment to an elongate length of threaded rod (2) and a channel member (99), the support structure (10) comprising:
- a bracket (12) having a support portion (20) for attachment to said channel member (99) and an attachment portion (22) for attachment to said threaded rod (2), the attachment portion (22) comprising a first aperture (14) and a second aperture (14), the second aperture (14) being spaced apart from the first aperture (14), and the first and second apertures (14) being aligned for receiving said threaded rod (2) therethrough;
- at least one detent element (18) configured to engage with threads of said threaded rod (2) to prevent movement of the support structure (10) in a direction parallel to an axis of the threaded rod (2);
- a pressure element (16) arranged to apply a force to the threaded rod (2) in a direction substantially perpendicular to the axis of the threaded rod (2); and
- biasing means (82) configured to urge the pressure element (16) towards the threaded rod (2) thereby urging the threaded rod (2) against a periphery of each aperture (14) such that, in use, the at least one detent element (18) engages with a root of the threads of the threaded rod (2),
**characterised in that** the support portion (20) comprises a main panel (24) including an array of holes (38) and two side wall panels (28), each side wall panel (28) extending perpendicularly from an edge of the main panel (24); and wherein the bracket (12) is formed from a single folded sheet of metallic or polymeric material.

2. A support structure as claimed in Claim 1, wherein the attachment portion (22) comprises a first panel (44) including the first aperture (14) and a second panel (46) including the second aperture (14) and wherein the first and second panels (44, 46) extend in converging directions away from the support portion (20).

3. A support structure as claimed in Claim 2, wherein the first panel (44) extends from a proximal end of the main panel (24) of the support portion (20).

4. A support structure as claimed in any preceding claim, wherein the pressure element (16) comprises a clamping plate (66).

5. A support structure as claimed in any preceding claim, wherein the pressure element (16) comprises a pair of engagement tabs (76), a first one of the engagement tabs (76) extending through the first aperture (14) and a second one of the engagement tabs (76) extending through the second aperture (14).

6. A support structure as claimed in any preceding claim, wherein a first detent element (18) is provided by an edge of the first aperture (14) and a second detent element (18) is provided by an edge of the second aperture (14).

7. A support structure as claimed in any preceding claim, wherein the at least one detent element (18) is a V-shaped edge of each aperture (14).

8. A support structure as claimed in any preceding claim, further comprising a locking member (86) movable between a first position in which the locking member (86) is not in contact with the pressure element (16) and a second position in which the locking member (86) is in contact with the pressure element (16).

9. A support structure as claimed in Claim 8, wherein the locking member (86) is arranged to apply a force to the pressure element (16) when the locking member (86) is in the second position, and wherein a direction of the force applied by the locking member (86) is the same as a direction of the force applied to the pressure element (16) by the biasing means (82).

10. A support structure as claimed in any preceding claim, wherein the support portion (20) further comprises a secondary panel (26).

11. An assembly, comprising a first support structure (10) as claimed in any one of Claims 1 to 10, a second support structure (10) as claimed in any one of Claims 1 to 10, and a cross member (99) connected to and extending between the support portions (20) of the first and second support structures (10).

12. An assembly as claimed in Claim 11, wherein the cross member (99) comprises a perforated channel which is secured to each of the support portions (20) by mechanical fasteners engaged with the holes (38) in the main panel (24).

13. A support assembly comprising a support structure (10) as claimed in any one of Claims 1 to 10 and a threaded rod (2) extending through each aperture (14).

14. A method of releasably attaching a support structure (10) to a threaded rod (2) and a channel member (99), the method comprising:
- inserting the threaded rod (2) through a pair of spaced apart and aligned apertures (14) in an attachment portion (22) of the support structure;
- urging a pressure element (16) to apply a force to the threaded rod (2) in a direction substantially perpendicular to an axis of the threaded rod (2) to urge the threaded rod (2) against a periphery of each aperture (14) such that at least one detent element (18) of the support structure (10) engages with threads of the threaded rod (2) to prevent movement of the support structure (10) in a direction parallel to the axis of the threaded rod (2); and
- securing the channel member (99) to a support portion (20) of the support structure (10), the support portion (20) comprising a main panel (24) including an array of holes (38) and two side wall panels (28), each side wall panel (28) extending perpendicularly from an edge of the main panel (24); wherein the support structure comprises a bracket (12) comprising the attachment portion (22) and the support portion (20) and the bracket (12) is formed from a single folded sheet of metallic or polymeric material.

15. A method as claimed in Claim 14, wherein the step of securing the channel member (99) to a support portion (20) of the support structure (10) comprises engaging mechanical fasteners with the holes (38) in the main panel (24).

## Patentansprüche

1. Stützstruktur (10) zur lösbaren Anbringung an einen Längenabschnitt einer Gewindestange (2) und einem Kanalelement (99), wobei die Stützstruktur (10) folgendes umfasst:
- eine Halterung (12) mit einem Stützabschnitt (20) zum Anbringen an dem Kanalelement (99) sowie mit einem Anbringabschnitt (22) zum Anbringen an der Gewindestange (2), wobei der Anbringabschnitt (22) eine erste Öffnung (14) und eine zweite Öffnung (14) umfasst, wobei die erste Öffnung (14) von der zweiten Öffnung (14) beabstandet ist, und wobei die erste und die zweite Öffnung (14) fluchten, um die Gewindestange (2) hierdurch aufzunehmen;
- wenigstens ein Sperrelement (18), welches dazu eingerichtet ist, mit dem Gewinde der Gewindestange (2) zusammenzugreifen, um die Bewegung der Stützstruktur (10) in einer Richtung parallel zu einer Achse der Gewinde-stange (2) zu verhindern;
- ein Druckelement (16), welches so eingerichtet ist, dass es eine Kraft auf die Gewindestange (2) in einer Richtung im Wesentlichen senkrecht zur Achse der Gewindestange (2) ausübt; und
- ein Vorspannmittel (82), welches dazu eingerichtet ist, das Druckelement (16) in Richtung der Gewinde-stange (2) zu drängen, wodurch die Gewindestange (2) gegen einen Rand von jeder Öffnung (14) derart gedrängt wird, dass im Gebrauchszustand das wenigstens eine Sperrelement (18) mit einem Boden des Gewindes der Gewindestange (2) zusammengreift,
**dadurch gekennzeichnet,**
**dass** der Stützabschnitt (20) einen Hauptwandteil (24), der eine Anordnung von Löchern (38) aufweist, sowie zwei Seitenwandteile (28) umfasst, wobei jeder Seitenwandteil (28) sich senkrecht von einer Kante des Hauptwandteils (24) aus erstreckt, und wobei die Halterung (12) aus einem einzelnen, gekanteten Zuschnitt aus Metall oder Polymermaterial ausgebildet ist.

2. Stützstruktur nach Anspruch 1,
bei welchem der Anbringabschnitt (22) ein erstes Wandteil (44), welches die erste Öffnung (14) enthält, und ein zweites Wandteil (46) umfasst, welches die zweite Öffnung (14) enthält, und wobei das erste und das zweite Wandteil (44, 46) sich in konvergierende Richtungen weg vom Stützabschnitt (20) erstrecken.

3. Stützstruktur nach Anspruch 2,
bei welchem das erste Wandteil (44) sich von einem nahegelegenen Ende des Hauptwandteils (24) des Stützabschnitts (20) aus erstreckt.

4. Stützstruktur nach einem der vorigen Ansprüche,
bei welchem das Druckelement (16) eine Klemmplatte (66) umfasst.

5. Stützstruktur nach einem der vorigen Ansprüche,
bei welchem das Druckelement (16) ein Paar Eingriffslaschen (76) umfasst, wobei eine erste der Eingriffsla-schen (76) sich durch die erste Öffnung (14) hindurch erstreckt, und wobei eine zweite der Eingriffslaschen (76) sich durch die zweite Öffnung (14) hindurch erstreckt.

6. Stützstruktur nach einem der vorigen Ansprüche,
bei welcher ein erstes Sperrelement (18) durch einen Rand der ersten Öffnung (14) bereitgestellt wird und ein zweites Sperrelement (18) durch einen Rand der zweiten Öffnung (14) bereitgestellt wird.

7. Stützstruktur nach einem der vorigen Ansprüche,
bei welchem wenigstens ein Sperrelement (18) ein V-förmiger Rand von jeder Öffnung (14) ist.

8. Stützstruktur nach einem der vorigen Ansprüche, welche weiter ein Verriegelungselement (86) umfasst, welches zwischen einer ersten Position, in welcher das Verriegelungselement (86) sich nicht im Kontakt mit dem Druckelement (16) befindet, und einer zweiten Position bewegbar ist, in welcher sich das Verriegelungselement (86) in Kontakt mit dem Druckelement (16) befindet.

9. Stützstruktur nach Anspruch 8,
bei welcher das Verriegelungselement (86) so angeordnet ist, dass es eine Kraft auf das Druckelement (16) ausübt, wenn sich das Verriegelungselement (86) in der zweiten Position befindet, und wobei die Richtung der Kraft, die durch das Verriegelungselement (86) ausgeübt wird, dieselbe wie die Richtung derjenigen Kraft ist, die durch das Vorspannmittel (82) auf das Druckelement (16) ausgeübt wird.

10. Stützstruktur nach einem der vorigen Ansprüche,
bei welcher der Stützabschnitt (20) weiter einen Sekundärwandteil (26) umfasst.

11. Anordnung, die eine erste Stützstruktur (10) nach einem der Ansprüche 1-10, eine zweite Stützstruktur (10) nach einem der Ansprüche 1-10 und ein Querelement (99) umfasst, welches mit den Stützabschnitten (20) der ersten und der zweiten Stützstruktur (10) verbunden ist und sich zwischen diesen erstreckt.

12. Anordnung nach Anspruch 11,
bei welcher das Querelement (99) einen perforierten Kanal umfasst, welcher an jedem der Stützabschnitte (20) über mechanische Verbindungselemente befestigt ist, welche in die Löcher (38) in dem Hauptwandteil (24) eingreifen.

13. Stützanordnung, die eine Stützstruktur (10) nach einem der Ansprüche 1-10 und eine Gewindestange (2) umfasst, welche sich durch jede Öffnung (14) hindurch erstreckt.

14. Verfahren zum lösbaren Anbringen einer Stützstruktur (10) an einer Gewindestange (2) und einem Kanalelement (99), wobei das Verfahren folgendes umfasst:
- Einschieben der Gewindestange (2) durch ein Paar voneinander beabstandeter und fluchtender Öffnungen (14) in einem Anbringabschnitt (22) der Stützstruktur;
- Drängen eines Druckelements (16), um eine Kraft auf die Gewindestange (2) in einer Richtung im Wesentlichen senkrecht zu einer Achse der Gewindestange (2) auszuüben, um die Gewindestange (2) gegen einen Rand von jeder Öffnung (14) derart zu drängen, dass wenigstens ein Sperrelement (18) der Stützstruktur (10) mit dem Gewin-de der Gewindestange (2) zusammengreift, um die Bewegung der Stützstruktur (10) in einer Richtung parallel zur Achse der Gewindestange (2) zu verhindern; und
- Befestigen des Kanalelements (99) an einem Stützabschnitt (20) der Stützstruktur (10), wobei der Stützabschnitt (20) einen Hauptwandteil (24), der eine Anordnung von Löchern (38) aufweist, und zwei Seitenwandteile (28) umfasst, wobei jeder Seitenwandteil (28) sich senkrecht von einem Rand des Hauptwandteils (24) aus erstreckt, wobei die Stützstruktur eine Halterung (12) umfasst, welche den Anbringabschnitt (22) und den Stützabschnitt (20) umfasst, und wobei die Halterung (12) aus einem einzigen abgekanteten Zuschnitt aus Metall- oder Polymermaterial ausgebildet ist.

15. Verfahren nach Anspruch 14,
bei welchem der Schritt, bei welchem das Kanalelement (99) an dem Stützabschnitt (20) der Stützstruktur (10) befestigt wird, umfasst, dass mechanische Verbindungselemente in die Löcher (38) in dem Hauptwandteil (24) eingreifen.

## Revendications

1. Structure de support (10) destinée à être fixée de manière amovible sur une longueur allongée de la tige filetée (2) et un élément de canal (99), la structure de support (10) comprenant :
une console (12) ayant une partie de support (20) pour la fixation audit élément de canal (99) et une partie de fixation (22) pour la fixation à ladite tige filetée (2), la partie de fixation (22) comprenant une première ouverture (14) et une seconde ouverture (14), la seconde ouverture (14) étant espacée de la première ouverture (14), et les première et seconde ouvertures (14) étant alignées pour recevoir ladite tige filetée (2) à travers ces dernières ;
au moins un élément denté (18) configuré pour se mettre en prise avec des filetages de ladite tige filetée (2) afin d'empêcher le mouvement de la structure de support (10) dans une direction parallèle à un axe de la tige filetée (2) ;
un élément de pression (16) agencé pour appliquer une force sur la tige filetée (2) dans une direction sensiblement perpendiculaire à l'axe de la tige filetée (2) ; et des moyens de sollicitation (82) configurés pour pousser l'élément de pression (16) vers la tige filetée (2), poussant ainsi la tige filetée (2) contre une périphérie de chaque ouverture (14) de sorte que, à l'usage, le au moins un élément denté (18) se met en prise avec une base des filetages de la tige filetée (2),
**caractérisée en ce que** la partie de support (20) comprend un panneau principal (24) comprenant un réseau de trous (38) et deux panneaux de paroi latérale (28), chaque panneau de paroi latérale (28) s'étendant perpendiculairement à partir d'un bord du panneau principal (24) ; et dans laquelle la console (12) est formée à partir d'une unique feuille pliée de matériau métallique ou polymère.

2. Structure de support selon la revendication 1, dans laquelle la partie de fixation (22) comprend un premier panneau (44) comprenant la première ouverture (14) et un second panneau (46) comprenant la seconde ouverture (14) et dans laquelle les premier et second panneaux (44, 46) s'étendent dans des directions convergentes à l'opposé de la partie de support (20).

3. Structure de support selon la revendication 2, dans laquelle le premier panneau (44) s'étend à partir d'une extrémité proximale du panneau principal (24) de la partie de support (20).

4. Structure de support selon l'une quelconque des revendications précédentes, dans laquelle l'élément de pression (16) comprend une plaque de serrage (66).

5. Structure de support selon l'une quelconque des revendications précédentes, dans laquelle l'élément de pression (16) comprend une paire de languettes de mise en prise (76), une première des languettes de mise en prise (76) s'étendant à travers la première ouverture (14) et une seconde des languettes de mise en prise (76) s'étendant à travers la seconde ouverture (14).

6. Structure de support selon l'une quelconque des revendications précédentes, dans laquelle un premier élément denté (18) est fourni par un bord de la première ouverture (14) et un second élément denté (18) est fourni par un bord de la seconde ouverture (14).

7. Structure de support selon l'une quelconque des revendications précédentes, dans laquelle le au moins un élément denté (18) est un bord en forme de V de chaque ouverture (14).

8. Structure de support selon l'une quelconque des revendications précédentes, comprenant en outre un élément de verrouillage (86) mobile entre une première position dans laquelle l'élément de verrouillage (86) n'est pas en contact avec l'élément de pression (16) et une seconde position dans laquelle l'élément de verrouillage (86) est en contact avec l'élément de pression (16).

9. Structure de support selon la revendication 8, dans laquelle l'élément de verrouillage (86) est agencé pour appliquer une force sur l'élément de pression (16) lorsque l'élément de verrouillage (86) est dans la seconde position, et dans laquelle une direction de la force appliquée par l'élément de verrouillage (86) est la même qu'une direction de la force appliquée sur l'élément de pression (16) par les moyens de sollicitation (82).

10. Structure de support selon l'une quelconque des revendications précédentes, dans laquelle la partie de support (20) comprend en outre un panneau secondaire (26).

11. Ensemble comprenant une première structure de support (10) selon l'une quelconque des revendications 1 à 10, une seconde structure de support (10) selon l'une quelconque des revendications 1 à 10, et un élément transversal (99) raccordé à et s'étendant entre les parties de support (20) des première et seconde structures de support (10).

12. Ensemble selon la revendication 11, dans lequel l'élément transversal (99) comprend un canal perforé qui est fixé à chacune des parties de support (20) par des fixations mécaniques mises en prise avec les trous (38) dans le panneau principal (24).

13. Ensemble de support comprenant une structure de support (10) selon l'une quelconque des revendications 1 à 10 et une tige filetée (2) s'étendant à travers chaque ouverture (14).

14. Procédé pour fixer, de manière amovible, une structure de support (10) à une tige filetée (2) et un élément de canal (99), le procédé comprenant les étapes consistant à :
insérer la tige filetée (2), par le biais d'une paire d'ouvertures (14) espacées et alignées, dans une partie de fixation (22) de la structure de support ;
pousser un élément de pression (16) pour appliquer une force sur la tige filetée (2) dans une direction sensiblement perpendiculaire à un axe de la tige filetée (2) afin de pousser la tige filetée (2) contre une périphérie de chaque ouverture (14) de sorte qu'au moins un élément denté (18) de la structure de support (10) se met en prise avec des filetages de la tige filetée (2) pour empêcher le mouvement de la structure de support (10) dans une direction parallèle à l'axe de la tige filetée (2) ; et
fixer l'élément de canal (99) sur une partie de support (20) de la structure de support (10), la partie de support (20) comprenant un panneau principal (24) comprenant un réseau de trous (38) et deux panneaux de paroi latérale (28), chaque panneau de paroi latérale (28) s'étendant perpendiculairement à partir d'un bord du panneau principal (24) ; dans lequel la structure de support comprend une console (12) comprenant la partie de fixation (22) et la partie de support (20) et la console (12) est formée à partir d'une unique feuille pliée de matériau métallique ou polymère .

15. Procédé selon la revendication 14, dans lequel l'étape consistant à fixer l'élément de canal (99) sur une partie de support (20) de la structure de support (10) comprend l'étape consistant à mettre en prise des fixations mécaniques avec les trous (38) dans le panneau principal (24).
